# EUROPEAN PATENT APPLICATION

(11) **EP 4 811 483 A1**
(43) Date of publication of application: **23.09.2026**
(21) Application number: 24891116.6
(22) Date of filing: 07.10.2024
(51) Int. Cl.: H01M 10/0567, H01M 10/052

(54) **ADDITIVE FOR NONAQUEOUS ELECTROLYTIC SOLUTION, NONAQUEOUS ELECTROLYTIC SOLUTION, AND LITHIUM ION SECONDARY BATTERY**

(30) Priority: 13.11.2023 JP 2023193021
(71) Applicant: DKS Co. Ltd., Kyoto-shi, Kyoto 600-8873 (JP)
(72) Inventor: KAJI, Soki, Kyoto-shi, Kyoto 600-8873 (JP); HOSHIHARA, Yuji, Kyoto-shi, Kyoto 600-8873 (JP)
(74) Representative: TBK
(86) International application number: PCT/JP2024/035720
(87) International publication number: WO 2025/105074

(57) **Abstract**

Cycle characteristics of a lithium-ion secondary battery including a non-aqueous electrolyte solution are improved.

An additive for a non-aqueous electrolyte solution according to an embodiment is an additive to be added to a non-aqueous electrolyte solution in a lithium-ion secondary battery including a positive electrode, a negative electrode, and the non-aqueous electrolyte solution. The additive includes a compound including an oxetane ring at a terminal thereof and including a urethane bond.

## Description

### Technical Field

Embodiments of the present invention relate to an additive for a non-aqueous electrolyte solution, a non-aqueous electrolyte solution, and a lithium-ion secondary battery.

### Background Art

Lithium-ion secondary batteries include a positive electrode, a negative electrode, and a non-aqueous electrolyte, and are required to have improved battery characteristics such as cycle characteristics. In order to improve cycle characteristics, for example, Patent Literature 1 discloses blending a copolymer of methyl methacrylate and (3-ethyloxetan-3-yl)methyl methacrylate into a non-aqueous electrolyte, and blending vinylene carbonate together with the copolymer.

### Citation List

### Patent Literature

PTL 1: Japanese Unexamined Patent Application Publication No. 2023-88767

### Summary of Invention

### Technical Problem

Non-aqueous electrolytes for lithium-ion secondary batteries include liquid non-aqueous electrolyte solutions and gel-like solid electrolytes. In general, adding a polymer to a non-aqueous electrolyte solution decreases conductivity. However, the present inventors have found that adding a specified polymer to a non-aqueous electrolyte solution improves the cycle characteristics of a lithium-ion secondary battery.

Objects of embodiments of the present invention are to provide an additive for a non-aqueous electrolyte solution that can improve the cycle characteristics of a lithium-ion secondary battery including a non-aqueous electrolyte solution, and a non-aqueous electrolyte solution and a lithium-ion secondary battery that use the additive. Solution to Problem

The present invention includes the following embodiments.
[1] An additive for a non-aqueous electrolyte solution in a lithium-ion secondary battery including a positive electrode, a negative electrode, and the non-aqueous electrolyte solution, the additive including a compound including an oxetane ring at a terminal thereof and including a urethane bond.
[2] The additive for a non-aqueous electrolyte solution according to [1], wherein the compound includes a structure derived from a polycarbonate polyol.
[3] The additive for a non-aqueous electrolyte solution according to [1] or [2], wherein, in the compound, a number of oxetane rings per molecule is 2.0 to 100 on average.
[4] The additive for a non-aqueous electrolyte solution according to any one of [1] to [3], wherein the compound has a weight-average molecular weight of 2,500 to 200,000.
[5] A non-aqueous electrolyte solution for a lithium-ion secondary battery including a positive electrode, a negative electrode, and the non-aqueous electrolyte solution, the non-aqueous electrolyte solution including a supporting electrolyte, an aprotic solvent, and a compound including an oxetane ring at a terminal thereof and including a urethane bond.
[6] The non-aqueous electrolyte solution according to [5], further including vinylene carbonate and/or fluoroethylene carbonate.
[7] A lithium-ion secondary battery including a positive electrode, a negative electrode, and the non-aqueous electrolyte solution according to [5] or [6].

### Advantageous Effects of Invention

Embodiments of the present invention can improve the cycle characteristics of a lithium-ion secondary battery including a non-aqueous electrolyte solution.

### Description of Embodiments

An additive for a non-aqueous electrolyte solution according to the present embodiment is an additive to be added to a non-aqueous electrolyte solution in a lithium-ion secondary battery including a positive electrode, a negative electrode, and the non-aqueous electrolyte solution, and the additive includes a compound including a urethane bond and including an oxetane ring at a terminal thereof (hereafter also referred to as an "oxetane ring-containing compound"). The addition of such an oxetane ring-containing compound to the non-aqueous electrolyte solution can improve the cycle characteristics of the lithium-ion secondary battery.

The oxetane ring-containing compound is a compound including a urethane structure in the molecule and including an oxetane ring at a terminal thereof and is preferably a polymer based on polyurethane and including an oxetane ring at a terminal thereof. Thus, the oxetane ring-containing compound according to an embodiment includes a polyurethane formed by a reaction between a polyol and a polyisocyanate, and an oxetane ring added to a molecular terminal of the polyurethane, and includes a structure derived from the polyol and a structure derived from the polyisocyanate.

The polyol may be composed only of a polyol having two hydroxy groups per molecule; however, the combination of a polyol having two hydroxy groups and a polyol having three or more hydroxy groups is preferably used. In this case, the oxetane ring-containing compound has branching and includes three or more terminals, making it possible for the number of oxetane rings per molecule to be three or more.

Examples of the polyol include polycarbonate polyols, polyether polyols, polyester polyols, polyether ester polyols, polyolefin polyols, polyhydric alcohols, polyacrylic polyols, polyacetal polyols, polysiloxane polyols, and fluorinated polyols. These may be used alone or in combination of two or more thereof.

Examples of the polycarbonate polyols include polyols obtained by a reaction between a polyol compound such as an aliphatic polyol or an alicyclic polyol and a carbonate derivative such as a carbonate ester or phosgene; and bifunctional polyols, namely, polycarbonate diols, are preferable. Such polyol compounds are preferably diols having 4 to 12 carbon atoms, and examples thereof include aliphatic diols such as 1,4-butanediol, 1,5-pentanediol, 1,6-hexanediol, 3-methyl-1,5-pentanediol, 1,8-octanediol, and 1,10-decanediol, and alicyclic diols such as isosorbide. For such a polycarbonate polyol, polyol compounds and carbonate derivatives can each be used alone or in combination of two or more thereof.

Specific examples of the polycarbonate polyols include PCDL T-6001, T-6002, T-5651, T-5652, T-5650J, T-4671, and T-4672 manufactured by Asahi Kasei Corporation; Kuraray Polyol C-590, C-1050, C-1050R, C-1090, C-2050, C-2050R, C-2070, C-2070R, C-2090, C-2090R, C-3090, C-3090R, C-4090, C-4090R, C-5090, C-5090R, C-1065N, C-2065N, C-1015N, and C-2015N manufactured by KURARAY CO., LTD.; and ETERNACOLL (registered trademark) UH-50, UH-100, UH-200, UH-300, UM-90 (3/1), UM-90 (1/1), UM-90 (1/3), and UC-100 manufactured by UBE Corporation.

The weight-average molecular weight (Mw) of the polycarbonate polyols is not particularly limited, and may be, for example, 300 to 5000, 500 to 4000, or 1000 to 3000. The weight-average molecular weight of the polycarbonate polyols is a polystyrene-equivalent weight-average molecular weight measured by gel permeation chromatography (GPC), and specifically can be measured by the method described in the EXAMPLES section.

Examples of the polyether polyols include polyols obtained by addition polymerization of an alkylene oxide to a polyhydric alcohol, polytetramethylene ether glycols, and polythioether polyols. Examples of the polyhydric alcohol include ethylene glycol, diethylene glycol, triethylene glycol, 1,2-propylene glycol, 1,3-propylene glycol, neopentyl glycol, 1,3-butanediol, 1,4-butanediol, 1,5-pentanediol, 3-methyl-1,5-pentanediol, 1,6-hexanediol, 1,8-octanediol, 2-methyl-1,3-propanediol, glycerol, trimethylolpropane, and pentaerythritol. Examples of the alkylene oxide include ethylene oxide, propylene oxide, and butylene oxide.

Examples of the polyester polyols and the polyether ester polyols include esterified products of a polyhydric alcohol or a polyether polyol with a polycarboxylic acid or a polycarboxylic acid anhydride. Examples of the polycarboxylic acid and the polycarboxylic acid anhydride include succinic acid, glutaric acid, adipic acid, sebacic acid, phthalic acid, isophthalic acid, terephthalic acid, trimellitic acid, tetrahydrofuroic acid, endomethylene tetrahydrofuroic acid, hexahydrophthalic acid, and acid anhydrides of the foregoing. Examples of the polyester polyols include castor oil polyol and polycaprolactone polyol.

The polyolefin polyols refer to compounds that are polymers or copolymers of a diolefin having 4 to 12 carbon atoms such as butadiene or isoprene and that have a plurality of hydroxy groups. The copolymers may be, for example, copolymers of a diolefin having 4 to 12 carbon atoms and an α-olefin having 2 to 22 carbon atoms. Examples of the polyolefin polyols include polybutadiene polyol and polyisoprene polyol, and saturated aliphatic polyols obtained by hydrogenating double bonds in these molecules may also be used.

Preferred examples of the polyhydric alcohols used as the above-described polyol include low-molecular-weight polyols having a molecular weight of 400 or less, such as ethylene glycol, diethylene glycol, triethylene glycol, 1,2-propylene glycol, 1,3-propylene glycol, neopentyl glycol, 1,3-butanediol, 1,4-butanediol, 1,5-pentanediol, 3-methyl-1,5-pentanediol, 1,6-hexanediol, 1,8-octanediol, 2-methyl-1,3-propanediol, glycerol, trimethylolpropane, pentaerythritol, bisphenol A, and hydrogenated bisphenol A.

Examples of the polyisocyanate include various polyisocyanate compounds having two or more isocyanate groups per molecule. Examples of the polyisocyanate include aliphatic polyisocyanates, alicyclic polyisocyanates, aromatic polyisocyanates, araliphatic polyisocyanates, and modified products of the foregoing; and the foregoing may be used alone or in combination of two or more thereof.

Examples of the aliphatic polyisocyanates include tetramethylene diisocyanate, dodecamethylene diisocyanate, pentamethylene diisocyanate (PDI), hexamethylene diisocyanate (HDI), 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate, which may be used alone or in combination of two or more thereof.

Examples of the alicyclic polyisocyanates include isophorone diisocyanate (IPDI), hydrogenated xylylene diisocyanate, dicyclohexylmethane 4,4'-diisocyanate (hydrogenated MDI), 1,4-cyclohexane diisocyanate, methylcyclohexylene diisocyanate, and 1,3-bis(isocyanatomethyl)cyclohexane, which may be used alone or in combination of two or more thereof.

Examples of the aromatic polyisocyanates include tolylene diisocyanate (TDI), diphenylmethane diisocyanate (MDI), polymeric MDI, 4,4'-dibenzyl diisocyanate, 1,5-naphthylene diisocyanate, xylylene diisocyanate (XDI), 1,3-phenylene diisocyanate, and 1,4-phenylene diisocyanate, which may be used alone or in combination of two or more thereof.

Examples of the araliphatic polyisocyanates include dialkyldiphenylmethane diisocyanate, tetraalkyldiphenylmethane diisocyanate, and α,α,α,α-tetramethylxylylene diisocyanate, which may be used alone or in combination of two or more thereof.

Examples of the modified products of the foregoing polyisocyanates include isocyanurate-modified products, allophanate-modified products, biuret-modified products, adduct-modified products, and carbodiimide-modified products.

The polyisocyanate is preferably an alicyclic polyisocyanate and/or an aromatic polyisocyanate, and more preferably an alicyclic polyisocyanate. Accordingly, the oxetane ring-containing compound preferably includes a structure derived from an alicyclic polyisocyanate and/or a structure derived from an aromatic polyisocyanate, and more preferably includes a structure derived from an alicyclic polyisocyanate.

The oxetane ring-containing compound preferably includes, in addition to the structure derived from a polyisocyanate, a structure derived from a polycarbonate polyol as the structure derived from a polyol. That is, the above-described polyol is preferably a polycarbonate polyol, and more preferably a polycarbonate diol. In general, carbonates are used as aprotic solvents in non-aqueous electrolyte solutions and hence the oxetane ring-containing compound including a structure derived from a polycarbonate polyol can have enhanced affinity for non-aqueous electrolyte solutions.

The above-described polyol may be a combination of a polycarbonate polyol and a polyether polyol. That is, the oxetane ring-containing compound according to an embodiment preferably includes, in addition to the structure derived from a polyisocyanate, a structure derived from a polycarbonate polyol and a structure derived from a polyether polyol as structures derived from polyols. More preferably, the structures derived from polyols are a structure derived from a polycarbonate diol and a structure derived from a trifunctional polyether polyol. In this case, the polyol preferably includes a polycarbonate polyol (preferably a polycarbonate diol; the same applies hereafter) as the main component. For example, 100 mass% of the polyol preferably includes 70 to 99 mass% of the polycarbonate polyol and 1 to 30 mass% of the trifunctional polyether polyol, more preferably includes 80 to 98 mass% of the polycarbonate polyol and 2 to 20 mass% of the trifunctional polyether polyol, and still more preferably includes 90 to 97 mass% of the polycarbonate polyol and 3 to 10 mass% of the trifunctional polyether polyol.

As described above, the oxetane ring-containing compound includes an oxetane ring at a terminal thereof. Preferably, an oxetane ring is provided at a terminal on the polyisocyanate side of the above-described polyurethane. The method for introducing an oxetane ring into a terminal on the polyisocyanate side may be, for example, a method of reacting a compound including an oxetane ring and an active hydrogen group with an isocyanate group (NCO) at a terminal of a polyurethane having a structure derived from a polyisocyanate at the terminal. Here, examples of the active hydrogen group include a hydroxy group, primary amino groups, and secondary amino groups. Examples of the compound including an oxetane ring and an active hydrogen group include 3-hydroxymethyl-3-ethyloxetane and 3-oxetanol. When the active hydrogen group is a hydroxy group, the oxetane ring is added to the structure derived from the polyisocyanate via a urethane bond. When the active hydrogen group is an amino group, the oxetane ring is added to the structure derived from the polyisocyanate via a urea bond.

The oxetane ring may be added to all terminals of the oxetane ring-containing compound, or may be added to a part of the terminals. For example, a compound including an oxetane ring and an active hydrogen group may be reacted with a part of the isocyanate groups at the terminals of the polyurethane, and a compound including an active hydrogen group and including no oxetane rings may be reacted with the remaining isocyanate groups. In this way, the number of oxetane rings per molecule of the oxetane ring-containing compound can be adjusted.

The number of oxetane rings per molecule of the oxetane ring-containing compound is not particularly limited, but is, on average, preferably 2.0 to 100, more preferably 2.0 to 50, still more preferably 2.1 to 30, and yet more preferably 4.0 to 15. An increase in the number of oxetane rings per molecule can enhance the effect of improving cycle characteristics. On the other hand, increasing the number of oxetane rings per molecule requires increasing the branching of the molecular chains of the oxetane ring-containing compound, which increases the molecular weight and leads to an increase in the viscosity of the non-aqueous electrolyte solution. Therefore, the number of oxetane rings per molecule is preferably 100 or less. The number of oxetane rings per molecule can be measured by the method described in the EXAMPLES section.

The weight-average molecular weight (Mw) of the oxetane ring-containing compound is not particularly limited, but is preferably 2,500 to 200,000. When the weight-average molecular weight is 200,000 or less, the viscosity of the non-aqueous electrolyte solution can be suppressed. The weight-average molecular weight of the oxetane ring-containing compound is more preferably 5,000 to 150,000, and still more preferably 10,000 to 100,000. The weight-average molecular weight of the oxetane ring-containing compound is a polystyrene-equivalent weight-average molecular weight measured by gel permeation chromatography (GPC), and specifically is measured by the method described in the EXAMPLES section.

The method for producing the oxetane ring-containing compound is not particularly limited. For example, the following method may be employed. First, a polyol and a polyisocyanate are reacted under reaction conditions of 30°C to 130°C for about 0.5 hours to about 10 hours to synthesize a terminal NCO-containing polyurethane. Next, a compound including an oxetane ring and an active hydrogen group is added and reacted with the terminal NCO-containing polyurethane under reaction conditions of 30°C to 130°C for about 0.5 hours to about 10 hours. Thereafter, cooling to 5°C to 45°C is carried out as necessary to thereby obtain the oxetane ring-containing compound.

In the reaction, the solvent can be any organic solvent such as diethyl carbonate or N-methyl-2-pyrrolidone (NMP). For the urethane reaction, a catalyst can be used and examples thereof include amine compounds and metal-based catalysts such as tin octylate and bismuth octylate.

In synthesis of the terminal NCO-containing polyurethane, the molar ratio [NCO]/[OH] of the isocyanate groups (NCO) of the polyisocyanate to the hydroxy groups (OH) of the polyol is set to be higher than 1, for example, 1.1 to 2.0. Note that the ratio of the total isocyanate group equivalents of the polyisocyanate to the total active hydrogen group equivalents of all active hydrogen groupcontaining compounds including the polyol and the compound including an oxetane ring and an active hydrogen group (total isocyanate group equivalents/total active hydrogen group equivalents) is preferably 0.9 to 1.0 so that no isocyanate groups remain.

The additive for a non-aqueous electrolyte solution according to the present embodiment includes the oxetane ring-containing compound, and may be composed only of the oxetane ring-containing compound, or may include, in addition to the oxetane ring-containing compound, another additive and an organic solvent.

The other additive may be, for example, vinylene carbonate and/or fluoroethylene carbonate, which will be described later. In that case, the amount of vinylene carbonate and/or fluoroethylene carbonate is not particularly limited. For example, the amount of vinylene carbonate and/or fluoroethylene carbonate may be 10 to 1000 parts by mass, or 30 to 500 parts by mass, relative to 100 parts by mass of the oxetane ring-containing compound.

When the additive for a non-aqueous electrolyte solution includes an organic solvent, the organic solvent is preferably an aprotic solvent described later. In that case, the amount of the organic solvent is preferably such that the concentration of the oxetane ring-containing compound is 10 to 50 mass%, and more preferably 20 to 40 mass%.

The non-aqueous electrolyte solution according to the present embodiment includes, in addition to the oxetane ring-containing compound, a supporting electrolyte and an aprotic solvent. The non-aqueous electrolyte solution is a liquid electrolyte in which the supporting electrolyte and the oxetane ring-containing compound are dissolved in the aprotic solvent that is a non-aqueous solvent.

The supporting electrolyte is a substance that increases the conductivity of the aprotic solvent, and examples thereof include lithium salts such as LiPF₆, LiBF₄, LiAsF₆, LiSbF₆, LiN(SO₂F)₂ (that is, lithium bis(fluorosulfonyl)imide: LiFSI), LiAlCl₄, LiClO₄, LiCF₃SO₃, LiC₄F₉SO₃, LiC(CF₃SO₂)₃, LiN(CF₃SO₂)₂, LiN(C₂F₅SO₂)₂, lithium carboxylates, lithium chloroborane, lithium tetraphenylborate, LiBr, LiI, LiSCN, LiCl, and LiF. These supporting electrolytes may be used alone or in combination of two or more thereof.

The supporting electrolyte preferably includes a fluorine-containing lithium salt, and more preferably includes at least one substance selected from the group consisting of LiPF₆, LiBF₄, LiAsF₆, LiSbF₆, and LiN(SO₂F)₂.

The concentration of the supporting electrolyte in the non-aqueous electrolyte solution is not particularly limited, but is preferably 0.5 to 2.0 mol/L, more preferably 0.6 to 1.8 mol/L, and may be 0.8 to 1.6 mol/L.

Examples of the aprotic solvent include cyclic carbonates such as ethylene carbonate (EC), propylene carbonate (PC), and butylene carbonate (BC); chain carbonates such as diethyl carbonate (DEC), dimethyl carbonate (DMC), ethyl methyl carbonate (EMC), and dipropyl carbonate (DPC); aliphatic carboxylic acid esters such as methyl formate, methyl acetate, and ethyl propionate; γ-lactones such as γ-butyrolactone; chain ethers such as 1,2-diethoxyethane (DEE) and ethoxymethoxyethane (EME); cyclic ethers such as tetrahydrofuran (THF) and 2-methyltetrahydrofuran; fluorinated derivatives of the foregoing; dimethyl sulfoxide (DMSO), 1,3-dioxolane, formamide, acetamide, dimethylformamide (DMF), acetonitrile, propylnitrile, nitromethane, phosphoric acid triesters, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propane sultone, anisole, N-methylpyrrolidone, and fluorinated carboxylic acid esters. These aprotic organic solvents may be used alone or in combination of two or more thereof.

The aprotic solvent preferably includes at least one solvent selected from the group consisting of cyclic carbonates, chain carbonates, aliphatic carboxylic acid esters, γ-lactones, cyclic ethers, and chain ethers. More preferably, the aprotic solvent includes at least one selected from the group consisting of cyclic carbonates and chain carbonates. In an embodiment, the aprotic solvent may include at least one selected from the group consisting of EC, PC, BC, DEC, DMC, EMC, and DPC, and may include at least one selected from the group consisting of EC, PC, and BC and at least one selected from the group consisting of DEC, DMC, EMC, and DPC.

The content of the oxetane ring-containing compound in the non-aqueous electrolyte solution is not particularly limited, and is preferably 0.1 to 5.0 mass%, more preferably 0.3 to 4.0 mass%, and still more preferably 0.5 to 3.0 mass%, relative to the total amount of the supporting electrolyte, the aprotic solvent, and the oxetane ring-containing compound.

The non-aqueous electrolyte solution according to an embodiment preferably further includes vinylene carbonate (VC) and/or fluoroethylene carbonate (FEC) as an additive. The further addition of vinylene carbonate and/or fluoroethylene carbonate to the non-aqueous electrolyte solution containing the oxetane ring-containing compound can further improve the cycle characteristics.

The content of vinylene carbonate and/or fluoroethylene carbonate in the non-aqueous electrolyte solution (specifically, the amount of either one when only either one of VC or FEC is included, or the total amount of both when both are included) is not particularly limited, and is preferably 0.1 to 5.0 mass%, more preferably 0.5 to 4.0 mass%, and still more preferably 1.0 to 3.0 mass%, relative to the total amount of the supporting electrolyte, the aprotic solvent, and the oxetane ring-containing compound.

The non-aqueous electrolyte solution according to the present embodiment is liquid at room temperature (25°C), and the viscosity at 25°C is preferably 5 to 100 mPa·s, more preferably 6 to 50 mPa·s, and still more preferably 8 to 30 mPa·s. The viscosity of the non-aqueous electrolyte solution is measured by the method described in the EXAMPLES section.

As described above, the non-aqueous electrolyte solution is liquid and is not gelled into a solid electrolyte, and hence the non-aqueous electrolyte solution preferably does not include inorganic oxides. The solution is not to be gelled by heating and includes an aprotic solvent, and hence does not have the necessity of including an ionic liquid; however, addition of a small amount of an ionic liquid is not excluded as long as advantages are not impaired.

Note that the non-aqueous electrolyte solution may appropriately include, in addition to the above-described components, additives such as an acid anhydride, a sulfonic acid ester, diphenyl disulfide, cyclohexyl benzene, biphenyl, fluorobenzene, and t-butylbenzene.

The lithium-ion secondary battery according to the present embodiment is a lithium-ion secondary battery including a positive electrode, a negative electrode, and the non-aqueous electrolyte solution, in which the non-aqueous electrolyte is liquid. In the lithium-ion secondary battery, the oxetane ring of the oxetane ring-containing compound included in the non-aqueous electrolyte solution preferably does not react basically and exists as an oxetane ring at least at the time of completion of the battery (in a brand-new state). The oxetane ring may react upon repeated charging and discharging to form a crosslinked structure.

The positive electrode includes at least a positive electrode active material. The positive electrode may be, for example, a positive electrode in which a positive electrode mixture layer containing a positive electrode active material is formed on one or both sides of a current collector made of a metal such as aluminum foil.

The positive electrode mixture layer can be formed by applying a positive electrode mixture-containing coating material to a current collector, drying it, and compressmolding it. The positive electrode mixture-containing coating material can be obtained by dispersing and kneading the positive electrode active material together with a conductive agent such as carbon black or graphite and a binder such as polyvinylidene fluoride (PVDF) in a dispersion medium such as N-methyl-2-pyrrolidone (NMP).

The positive electrode active material is not particularly limited as long as it can undergo intercalation and deintercalation of lithium ions. Examples thereof include metal oxides such as CuO, Cu₂O, MnO₂, V₂O₅, CrO₃, MoO₃, Fe₂O₃, Ni₂O₃, and CoO₃; composite oxides of lithium and a transition metal such as LiₓCoO₂, LiₓNiO₂, LiₓMn₂O₄, and LiFePO₄; metal chalcogenides such as TiS₂, MoS₂, and NbSe₃; and conductive polymers such as polyacene, polyparaphenylene, polypyrrole, and polyaniline. Of these, generally called high-voltage type substances, which are composite oxides of lithium and one or more selected from transition metals such as cobalt, nickel, and manganese, are preferable in that lithium-ion release properties and a high voltage are easily obtained. Specific examples of composite oxides of lithium and cobalt, nickel, or manganese include LiCoO₂, LiMnO₂, LiMn₂O₄, LiNiO₂, LiNiₓCo₍₁₋ₓ₎O₂, and LiMnₐNi_{b}Co_{c}O₂ (a + b + c = 1). Other examples include such lithium composite oxides doped with a small amount of an element such as fluorine, boron, aluminum, chromium, zirconium, molybdenum, or iron, and lithium composite oxide particles surface-treated with carbon, MgO, Al₂O₃, SiO₂, or the like. Such positive electrode active materials can be used in combination of two or more thereof.

The negative electrode includes at least a negative electrode active material. The negative electrode can be, for example, a negative electrode in which a negative electrode mixture layer containing a negative electrode active material is formed on one or both sides of a current collector made of a metal such as copper foil.

The negative electrode mixture layer can be formed by applying a negative electrode mixture-containing coating material to a current collector, drying it, and compressmolding it. The negative electrode mixture-containing coating material can be obtained by dispersing and kneading a negative electrode active material together with a binder such as styrene-butadiene rubber (SBR) in a dispersion medium such as water. The negative electrode mixture-containing coating material may further contain a thickener such as a carboxymethyl cellulose salt (CMC) or a conductive agent such as carbon black. The negative electrode mixture layer may also be formed by a method such as a vapor deposition method, a CVD method, or a sputtering method.

The negative electrode active material is not particularly limited as long as it can undergo intercalation and deintercalation of metallic lithium or lithium ions. Examples thereof include carbon materials such as natural graphite, artificial graphite, non-graphitizable carbon, and graphitizable carbon. Other examples include metal materials such as metallic lithium, alloys, and tin compounds, lithium transition metal nitrides, crystalline metal oxides, amorphous metal oxides, silicon compounds, and conductive polymers; and specific examples thereof include silicon monoxide (SiO), tin oxide, indium oxide, zinc oxide, lithium oxide, Li₄Ti₅O₁₂, and NiSi₅C₆.

The method for producing a lithium-ion secondary battery is not particularly limited and it can be produced by a publicly known method. For example, a positive electrode and a negative electrode are stacked with a separator interposed therebetween to form a laminate. Alternatively, a positive electrode and a negative electrode are wound into a flat shape with a separator interposed therebetween and then molded into a wound body. Then, after the laminate or the wound body is inserted into an exterior body such as a can or a laminate material, the non-aqueous electrolyte solution is injected into the exterior body and sealed, to thereby obtain a lithium-ion secondary battery.

Examples of the separator include separators generally used in lithium-ion secondary batteries, such as non-woven fabrics and polyolefin microporous membranes.

The shape of the lithium-ion secondary battery is not particularly limited, and for example, it can be formed into a cylindrical shape, a coin shape, a prismatic shape, or another desired shape.

### EXAMPLES

Hereinafter, the present invention will be described in more detail based on Examples and Comparative Examples, but the present invention is not limited thereto.

### [Measurement and evaluation methods]

### (Weight-average molecular weight)

A sample was dissolved in tetrahydrofuran (THF), and the polystyrene-equivalent weight-average molecular weight (Mw) was measured by gel permeation chromatography (GPC) (Prominence, manufactured by SHIMADZU CORPORATION) using four connected columns including a polystyrene-based gel as a packing material (Shodex GPC columns KF-601, KF-602, KF-603, and KF-604, manufactured by Resonac Corporation). The measurement conditions were a column oven temperature of 40°C, a THF flow rate of 0.6 mL/min, a sample concentration of 0.1 mass%, and a sample injection volume of 100 µL; and a differential refractive index detector (Shodex RI-504, manufactured by Resonac Corporation) was used for detection.

### (Number of oxetane rings per molecule of oxetane ring-containing compound)

The number of terminals per molecule of an oxetane ring-containing compound is calculated and the number of terminals is multiplied by the introduction ratio of oxetane rings into the terminals to thereby determine the number of oxetane rings per molecule of the oxetane ring-containing compound. The method for calculating the number of terminals per molecule is as follows. When the polyol constituting the oxetane ring-containing compound is composed only of a bifunctional hydroxyl group raw material and the skeleton of the compound has no branching, the number of terminals per molecule of the oxetane ring-containing compound is two. When a trifunctional hydroxyl group raw material is used as a polyol, the number of terminals per molecule of the oxetane ring-containing compound is determined as follows. Based on the charging mass ratio during the synthesis of the oxetane ring-containing compound, the amount of the bifunctional hydroxyl group raw material (Mw: B) present relative to 1 mol of the trifunctional hydroxyl group raw material (Mw: A) is calculated, and the result is defined as Z mol. At this time, a repeating unit of a chemical structure is formed in which, on average, Z molecules of the bifunctional hydroxyl group raw material and (2 + Z) molecules of a bifunctional isocyanate raw material (Mw: C) are bonded per molecule of the trifunctional hydroxyl group raw material. Thus, in the case of introducing one molecule of the trifunctional hydroxyl group raw material into the skeleton of the oxetane ring-containing compound, the average increase in the Mw of the entire oxetane ring-containing compound is calculated; and the molecular weight D of the repeating unit per molecule of the trifunctional hydroxyl group raw material is represented by the following formula: $D = A + B \times Z + C \times \left(2+Z\right)$

In the absence of the trifunctional hydroxyl group raw material, the number of terminals is two; an addition of each molecule of the trifunctional hydroxyl group raw material leads to an addition of one terminal, thereby increasing the number of terminals. Thus, when the Mw of the oxetane ring-containing compound determined by GPC measurement is defined as E, the number of terminals per molecule of the oxetane ring-containing compound is calculated as (2 + E/D).

### (Viscosity)

The electrolyte solution was placed in a 20 mL sample tube, and the viscosity at 25°C was measured using a vibrational viscometer (VM-10A-L, manufactured by SEKONIC CORPORATION).

### (Discharge capacity of battery)

A produced lithium-ion battery was subjected to constant-current charging at a 0.2C current and then subjected to constant-current discharging at a 0.2C current. The discharge capacity at that time was divided by the mass of the positive electrode active material to thereby determine the discharge capacity (unit: mAh/g) of the battery per unit mass of the positive electrode active material. Note that the 0.2C current indicates a current that is 0.2 times the 1C current at which the cell capacity can be discharged in 1 hour.

### (Cycle Characteristics)

A produced lithium-ion battery was subjected to constant-current charging at a 0.5C current and then constant-current discharging at a 1C current so as to be subjected to such charging and discharging repeated for a certain number of cycles. In Third Experimental Example, the number of cycles was 300, and in the other Examples and Comparative Examples, the number of cycles was 600. A value obtained by dividing the discharge capacity at the 300th or 600th cycle by the discharge capacity at the 1st cycle was defined as cycle characteristics.

### [Synthesis Example 1: synthesis of oxetane ring-containing compound 1]

In a separable flask, 27.6 parts by mass of a polycarbonate diol (product name: ETERNACOLL UH-200, manufactured by UBE Corporation, weight-average molecular weight: 2000), 0.9 parts by mass of a trifunctional polyether polyol (product name: DK Polyol G-480, manufactured by DAI-ICHI KOGYO SEIYAKU CO., LTD.), 6 parts by mass of dicyclohexylmethane 4,4'-diisocyanate, 41.5 parts by mass of diethyl carbonate, and 0.05 parts by mass of a Sn catalyst (product name: T-320, manufactured by Songwon Industrial Co., Ltd.) were added, and then heated and stirred at 80°C for about 2 hours to cause a urethaneforming reaction to proceed.

Subsequently, 1.2 parts by mass of 3-hydroxymethyl-3-ethyloxetane and 13.8 parts by mass of diethyl carbonate were added to the separable flask, and then heated and stirred at 80°C for about 2 hours to thereby cause a reaction. Thereafter, 8.9 parts by mass of diethyl carbonate was added, and water cooling was performed; the resulting solution was diluted by adding 19 parts by mass of diethyl carbonate to thereby obtain a solution of an oxetane ring-containing compound 1 adjusted to a solid content of 30 mass% (hereafter referred to as "additive 1").

The obtained oxetane ring-containing compound 1 is a polyurethane including a structure derived from the polycarbonate diol and a structure derived from the trifunctional polyether polyol as structures derived from polyols, and including a structure derived from hydrogenated MDI as a structure derived from a polyisocyanate, these structures being bonded together via urethane bonds, and is a polyurethane in which an oxetane ring is introduced into each molecular terminal of the polyurethane via a urethane bond, that is, a polyurethane including oxetane rings at all terminals. The oxetane ring-containing compound 1 was found to have a weight-average molecular weight of 90,000. The number of oxetane rings on average per molecule of the oxetane ring-containing compound 1 was found to be 8.9.

### [Synthesis Example 2: synthesis of oxetane ring-containing compound 2]

In a separable flask, 26.2 parts by mass of a polycarbonate diol (product name: ETERNACOLL UH-200, manufactured by UBE Corporation, weight-average molecular weight: 2000), 0.9 parts by mass of a trifunctional polyether polyol (product name: DK Polyol G-480, manufactured by DAI-ICHI KOGYO SEIYAKU CO., LTD.), 7.2 parts by mass of dicyclohexylmethane 4,4'-diisocyanate, 41.1 parts by mass of diethyl carbonate, and 0.05 parts by mass of a Sn catalyst (product name: T-320, manufactured by Songwon Industrial Co., Ltd.) were added, and then heated and stirred at 80°C for about 2 hours to cause a urethaneforming reaction to proceed.

Subsequently, 1.2 parts by mass of 3-hydroxymethyl-3-ethyloxetane and 13.7 parts by mass of diethyl carbonate were added to the separable flask, and then heated and stirred at 80°C for about 2 hours to thereby cause a reaction. Thereafter, 8.8 parts by mass of diethyl carbonate was added, and water cooling was performed; to the resulting solution, 1 part by mass of 3-methoxypropylamine was added and stirring was performed at room temperature for 1 hour. The resulting solution was diluted by adding 21.2 parts by mass of diethyl carbonate to thereby obtain a solution of an oxetane ring-containing compound 2 adjusted to a solid content of 30 mass% (hereafter referred to as "additive 2").

The obtained oxetane ring-containing compound 2 is a polyurethane including a structure derived from the polycarbonate diol and a structure derived from the trifunctional polyether polyol as structures derived from polyols, and including a structure derived from hydrogenated MDI as a structure derived from a polyisocyanate, these structures being bonded together via urethane bonds, and is a polyurethane including oxetane rings at 50% of the molecular terminals of the polyurethane and including methoxy groups introduced via urea bonds at 50% thereof. The number of oxetane rings on average per molecule of the oxetane ring-containing compound 2 was found to be 2.2. The weight-average molecular weight of the oxetane ring-containing compound 2 was found to be 30,000.

### [First Experimental Example]

In a dry room with a dew point of -40°C, the additive 1, lithium hexafluorophosphate (LiPF₆), ethylene carbonate (EC), and diethyl carbonate (DEC) were mixed and dissolved so that the concentration of LiPF₆ in the solution was 1.0 mol/L, the volume ratio of EC to DEC was EC/DEC = 30/70, and the concentration of the oxetane ring-containing compound 1 was 1.0 mass%, to obtain a non-aqueous electrolyte solution of Example 1. The same procedures as in Example 1 were performed except that the additive 1 was not added, to obtain a non-aqueous electrolyte solution of Comparative Example 1.

The viscosity of the obtained non-aqueous electrolyte solutions of Example 1 and Comparative Example 1 was measured; and the non-aqueous electrolyte solutions were used to produce lithium-ion secondary batteries and the discharge capacity and cycle characteristics of the batteries were evaluated. The method for producing the batteries is as follows.

### <Production of batteries>

### (Production of positive electrode)

Positive electrode active material NCM523 (LiNi_{0.5}Co_{0.2}Mn_{0.3}O₂, 94 parts by mass), 3 parts by mass of acetylene black (manufactured by Denka Company Limited, Li-400) as a conductive agent, 3 parts by mass of PVDF ("KF Polymer" manufactured by KUREHA CORPORATION) as a binder, and N-methyl-2-pyrrolidone as a dispersion medium were mixed so that the solid content was 60 mass% to prepare a positive electrode mixture-containing coating material. The obtained positive electrode mixture-containing coating material was applied onto aluminum foil (thickness: 15 µm) as a current collector using a coating machine, vacuum-dried at 130°C for 8 hours, and then subjected to roll pressing to thereby obtain a positive electrode.

### (Production of negative electrode)

Graphite (95.5 parts by mass) as a negative electrode active material, 0.5 parts by mass of acetylene black (manufactured by Denka Company Limited, Li-400) as a conductive agent, 2 parts by mass (in terms of solid content) of a CMC aqueous solution (BSH-6, manufactured by DAI-ICHI KOGYO SEIYAKU CO., LTD.) as a thickener, 2 parts by mass (in terms of solid content) of an SBR aqueous solution (manufactured by JSR Corporation, TRD-2001) as a binder, and pure water as a dispersion medium were mixed so that the solid content was 40 mass% to prepare a negative electrode mixture-containing coating material. The obtained negative electrode mixture-containing coating material was applied onto copper foil (thickness: 10 µm) as a current collector using a coating machine, vacuum-dried at 130°C for 8 hours, and then subjected to roll pressing to thereby obtain a negative electrode.

### (Assembly of batteries)

The positive electrode and the negative electrode obtained above were laminated such that a polyolefin-based single-layer separator was interposed as a separator therebetween, and a positive electrode terminal and a negative electrode terminal were respectively ultrasonically welded to the positive and negative electrodes. This laminate was placed into an aluminum laminate packaging material and heat-sealed while leaving an opening for solution injection, to produce a pre-injection battery with a positive electrode area of 18 cm² and a negative electrode area of 19.8 cm². In such pre-injection batteries thus obtained, the non-aqueous electrolyte solutions of Example 1 and Comparative Example 1 were injected through the injection openings, and the openings were sealed to obtain lithium-ion secondary batteries.

The results are as described in Table 1 below. In Example 1 in which the oxetane ring-containing compound was added, the discharge capacity of the battery increased and the cycle characteristics improved, as compared with Comparative Example 1 in which the compound was not added.

**[Table 1]**

| | C̅o̅m̅p̅a̅r̅a̅t̅i̅v̅e̅ E̅x̅a̅m̅p̅l̅e̅ 1̅ | Example 1 |
|---|---|---|
| Positive electrode active material | NCM | NCM |
| Negative electrode active material | Graphite | Graphite |
| Composition of electrolyte solution | LiPF₆ 1.0M, EC/DEC = 3/7 | LiPF₆ 1.0M, EC/DEC = 3/7 |
| Additive | None | 1% Additive1 |
| Viscosity of electrolyte solution (mPa·s) | 6 | 12 |
| Discharge capacity of battery (mAh/g) | 128 | 155 |
| Cycle characteristics | 0.61 | 0.72 |

### [Second Experimental Example]

### (Examples 2 to 4)

In a dry room with a dew point of -40°C, the additive 1, lithium hexafluorophosphate (LiPF₆), ethylene carbonate (EC), and diethyl carbonate (DEC) were mixed and dissolved to prepare a solution so that the concentration of LiPF₆ in the solution was 1.0 mol/L, the volume ratio of EC to DEC was EC/DEC = 30/70, and the concentration of the oxetane ring-containing compound 1 was 1.0 mass%. Vinylene carbonate (VC, 2.0 parts by mass) was added relative to 100 parts by mass of the obtained solution to obtain the non-aqueous electrolyte solution of Examples 2 to 4.

The viscosity of the obtained non-aqueous electrolyte solution of Examples 2 to 4 was measured; and the non-aqueous electrolyte solution was used to produce lithium-ion secondary batteries, and the discharge capacity and cycle characteristics of the batteries were evaluated. At that time, in Example 2, the same procedures as in First Experimental Example were performed to produce the battery. In Example 3, the same procedures as in First Experimental Example were performed except that lithium iron phosphate (LFP: LiFePO₄) was used as the positive electrode active material, to produce the battery. In Example 4, the same procedures as in First Experimental Example were performed except that lithium cobaltate (LCO: LiCoO₂) was used as the positive electrode active material, to produce the battery.

### (Example 5)

The same procedures as in Example 2 were performed except that 2.0 parts by mass of vinylene carbonate (VC) was replaced by 2.0 parts by mass of fluoroethylene carbonate (FEC), to produce a non-aqueous electrolyte solution of Example 5 and its viscosity was measured; and a lithium-ion secondary battery was produced and the discharge capacity and cycle characteristics of the battery were evaluated.

### (Example 6)

The same procedures as in Example 2 were performed except that diethyl carbonate (DEC) was replaced by ethyl methyl carbonate (EMC) to prepare a solution so that the volume ratio of EC to EMC in the solution was EC/EMC = 30/70, to produce a non-aqueous electrolyte solution of Example 6 and its viscosity was measured; and a lithium-ion secondary battery was produced and the discharge capacity and cycle characteristics of the battery were evaluated.

### (Examples 7 to 8)

The same procedures as in Example 2 were performed except that the solutions were prepared so that the concentration of the oxetane ring-containing compound 1 was 0.5 mass% in Example 7 and 3.0 mass% in Example 8, to produce non-aqueous electrolyte solutions of Example 7 and Example 8 and their viscosities were measured; and lithium-ion secondary batteries were produced and the discharge capacity and cycle characteristics of the batteries were evaluated.

### (Example 9)

The same procedures as in Example 2 were performed except that the additive 1 was replaced by the additive 2 to prepare a solution so that the concentration of the oxetane ring-containing compound 2 in the solution was 1.0 mass%, to produce a non-aqueous electrolyte solution of Example 9 and its viscosity was measured; and a lithium-ion secondary battery was produced and the discharge capacity and cycle characteristics of the battery were evaluated.

### (Comparative Example 2)

The same procedures as in Example 2 were performed except that the additive 1 was not added, to produce a non-aqueous electrolyte solution of Comparative Example 2 and its viscosity was measured; and a lithium-ion secondary battery was produced and the discharge capacity and cycle characteristics of the battery were evaluated.

### (Comparative Example 3)

The same procedures as in Example 2 were performed except that the additive 1 was replaced by a polyether (ELEXCEL TA-210, manufactured by DAI-ICHI KOGYO SEIYAKU CO., LTD.) to prepare a solution so that the concentration of the polyether in the solution was 1.0 mass%, to produce a non-aqueous electrolyte solution of Comparative Example 3 and its viscosity was measured; and a lithium-ion secondary battery was produced and the discharge capacity and cycle characteristics of the battery were evaluated.

The results are as described in Table 2 below. In Examples 2 to 9 in which VC or FEC was blended as an additive and the oxetane ring-containing compound 1 or 2 was added, the cycle characteristics improved, as compared with Comparative Example 2 in which they were not added. On the other hand, in Comparative Example 3 in which the polyether having no oxetane ring was added, the cycle characteristics deteriorated.

**[Table 2]**

| | Comparative Example 2 | Example 2 | Example 3 | Example 4 | Example 5 | Example 6 | Example 7 | Example 8 | Example 9 | Comparative Example 3 |
|---|---|---|---|---|---|---|---|---|---|---|
| Positive electrode active material | NCM | NCM | LFP | LCO | NCM | NCM | NCM | NCM | NCM | NCM |
| Negative electrode active material | Graphite | Graphite | Graphite | Graphite | Graphite | Graphite | Graphite | Graphite | Graphite | Graphite |
| Composition of electrolyte solution | LiPF₆ 1.0M, EC/DEC = 3/7 | | | | | *1 | LiPF₆ 1.0M, EC/DEC = 3/7 | | | |
| Additive | | 1% Additive 1 | 1% Additive 1 | 1% Additive 1 | 1% Additive 1 | 1% Additive 1 | 0.5% Additive 1 | 3% Additive 1 | 1% Additive 2 | 1% Polyether |
| | - 2%VC | 2%VC | 2%VC | 2%VC | 2%FEC | 2%VC | -2%VC | 2%VC | 2%VC | 2%VC |
| Viscosity of electrolyte solution (mPa·s) | 6 | 12 | 12 | 12 | 12 | 11 | 9 | 25 | 10 | 13 |
| Discharge capacity of battery (mAh/g) | 159 | 159 | 135 | 140 | 158 | 157 | 158 | 158 | 159 | 157 |
| Cycle characteristics | 0.84 | 0.94 | 0.95 | 0.93 | 0.90 | 0.92 | 0.94 | 0.90 | 0.91 | 0.78 |

| | | | | | | | | | | |
|---|---|---|---|---|---|---|---|---|---|---|
| *1: LiPF₆ 1.0M, EC/EMC = 3/7 | | | | | | | | | | |

### [Third Experimental Example]

### (Example 10)

In a dry room with a dew point of -40°C, the additive 1, lithium hexafluorophosphate (LiPF₆), ethylene carbonate (EC), and diethyl carbonate (DEC) were mixed and dissolved so that the concentration of LiPF₆ in the solution was 1.2 mol/L, the volume ratio of EC to DEC was EC/DEC = 30/70, and the concentration of the oxetane ring-containing compound 1 was 1.0 mass%, to obtain a non-aqueous electrolyte solution of Example 10. The viscosity of the obtained non-aqueous electrolyte solution of Example 10 was measured; and the non-aqueous electrolyte solution was used as in First Experimental Example to produce a lithium-ion secondary battery and the discharge capacity and cycle characteristics of the battery were evaluated.

### (Example 11)

The same procedures as in Example 10 were performed except that the additive 1 was replaced by the additive 2 to prepare a solution so that the concentration of the oxetane ring-containing compound 2 in the solution was 1.0 mass%, to produce a non-aqueous electrolyte solution of Example 11 and its viscosity was measured; and a lithium-ion secondary battery was produced and the discharge capacity and cycle characteristics of the battery were evaluated.

### (Example 12)

The same procedures as in Example 11 were performed except that the solution was prepared so that the concentration of the oxetane ring-containing compound 2 was 2.0 mass%, to produce a non-aqueous electrolyte solution of Example 12 and its viscosity was measured; and a lithium-ion secondary battery was produced and the discharge capacity and cycle characteristics of the battery were evaluated.

### (Comparative Example 4)

The same procedures as in Example 10 were performed except that the additive 1 was not added, to produce a non-aqueous electrolyte solution of Comparative Example 4 and its viscosity was measured; and a lithium-ion secondary battery was produced and the discharge capacity and cycle characteristics of the battery were evaluated.

The results are as described in Table 3 below. In Examples 10 to 12 in which the oxetane ring-containing compound 1 or 2 was added, the discharge capacity of the batteries increased and the cycle characteristics improved, as compared with Comparative Example 4 in which they were not added.

**[Table 3]**

| | Comparative Example 4 | Example 10 | Example 11 | Example 12 |
|---|---|---|---|---|
| Positive electrode active material | NCM | NCM | NCM | NCM |
| Negative electrode active material | Graphite | Graphite | Graphite | Graphite |
| Composition of electrolyte solution | LiPF₆ 1.2M, EC/DEC = 3/7 | | | |
| Additive | - | 1% Additive 1 | 1% Additive 2 | 2% Additive 2 |
| Viscosity of electrolyte solution (mPa·s) | 6 | 13 | 11 | 15 |
| Discharge capacity of battery (mAh/g) | 146 | 155 | 157 | 159 |
| Cycle characteristics | 0.71 | 0.94 | 0.79 | 0.96 |

### [Fourth Experimental Example]

### (Example 13)

In a dry room with a dew point of -40°C, the additive 1, lithium hexafluorophosphate (LiPF₆), ethylene carbonate (EC), and ethyl methyl carbonate (EMC) were mixed and dissolved to prepare a solution so that the concentration of LiPF₆ in the solution was 1.0 mol/L, the volume ratio of EC to EMC was EC/EMC = 30/70, and the concentration of the oxetane ring-containing compound 1 was 1.0 mass%. Vinylene carbonate (VC) (1.0 part by mass) and 2.0 parts by mass of fluoroethylene carbonate (FEC) were added relative to 100 parts by mass of the obtained solution to obtain a non-aqueous electrolyte solution of Example 13.

The viscosity of the obtained non-aqueous electrolyte solution of Example 13 was measured; and the non-aqueous electrolyte solution was used to produce a lithium-ion secondary battery and the discharge capacity and cycle characteristics of the battery were evaluated. At that time, in Example 13, lithium nickelate (NCA: LiNi_{0.8}Co_{0.15}Al_{0.05}O₂) was used as the positive electrode active material, and silicon monoxide (SiO) was used as the negative electrode active material. The positive electrode was produced by the same procedures as in First Experimental Example, and the negative electrode was produced by the following procedures.

### (Synthesis of binder for SiO negative electrode)

Into a four-necked flask equipped with a stirrer, a reflux condenser, a thermometer, and a nitrogen inlet tube, 69.17 parts by mass of hydrogenated polybutadiene polyol ("NISSO-PB GI-1000" manufactured by Nippon Soda Co., Ltd.), 4.17 parts by mass of dimethylolpropionic acid, 25.97 parts by mass of dicyclohexylmethane 4,4'-diisocyanate (hydrogenated MDI), and 150 parts by mass of methyl ethyl ketone were added and reacted at 75°C for 4 hours to obtain a methyl ethyl ketone solution of a urethane prepolymer having a free isocyanate group content of 2.1 mass% relative to the non-volatile content. This solution was cooled to 45°C, and an aqueous sodium hydroxide solution composed of 1.24 parts by mass of sodium hydroxide and 233 parts by mass of water was gradually added thereto to emulsify and disperse the mixture using a homogenizer. Subsequently, an aqueous solution obtained by diluting 1.48 parts by mass of diethylenetriamine with 37 parts by mass of water was added, and a chain extension reaction was performed for 1 hour. The solvent was removed under reduced pressure and heating at 50°C to obtain an aqueous dispersion of a sodium salt of polyurethane (binder 1) having a non-volatile content of about 32 mass%.

### (Aqueous dispersion of acetylene black)

Acetylene black ("Li400" manufactured by Denka Company Limited, 100 g) was added to 300 g of a 1 mass% aqueous solution of a carboxymethyl cellulose salt ("CELLOGEN 7A" manufactured by DAI-ICHI KOGYO SEIYAKU CO., LTD.) under stirring with a high-speed disper, and the mixture was stirred until uniform. This provided an aqueous dispersion of acetylene black having an acetylene black concentration of 25 mass%.

### (Aqueous dispersion of fibrous nanocarbon)

"TUBALL BATT" manufactured by OCSiAl (CNT purity > 93%, average diameter: 1.6 ± 0.5 nm) was used as single-wall carbon nanotubes (SWCNTs). The SWCNTs (0.5 g) were mixed with 50 g of a 1 mass% aqueous solution of a carboxymethyl cellulose salt ("CELLOGEN 7A" manufactured by DAI-ICHI KOGYO SEIYAKU CO., LTD.) in a beaker. After stirring, the beaker, an ultrasonic homogenizer (US-600T manufactured by NIHONSEIKI KAISHA LTD.), a circulation unit, and a tube pump were used to circulate and simultaneously disperse the slurry at an output of 100 µA for 90 minutes to thereby obtain an aqueous dispersion of fibrous nanocarbon having a fibrous nanocarbon concentration of 1 mass%.

### (Production of SiO negative electrode)

SiO (average particle diameter: 4.5 µm, specific surface area: 5.5 m²/g, 88.85 parts by mass) as a negative electrode active material, 40 parts by mass of the aqueous dispersion of fibrous nanocarbon and 4.0 parts by mass of the aqueous dispersion of acetylene black (solid content concentration: 25 mass%) as conductive agents, 43.3 parts by mass of a 2.0 mass% aqueous solution of a carboxymethyl cellulose sodium salt as a thickener, 30 parts by mass of the aqueous dispersion of the sodium salt of polyurethane of the binder 1, and 14 parts by mass of ion-exchanged water were used and mixed using a planetary mixer, to prepare a negative electrode mixture-containing coating material so as to have a solid content of 49 mass%. The obtained negative electrode mixture-containing coating material was applied onto copper foil (thickness: 10 µm) as a current collector using a coating machine, vacuum-dried at 130°C for 8 hours, and then subjected to roll pressing to thereby obtain a negative electrode.

### (Comparative Example 5)

The same procedures as in Example 13 were performed except that the additive 1 was not added, to produce a non-aqueous electrolyte solution of Comparative Example 5 and its viscosity was measured; and a lithium-ion secondary battery was produced and the discharge capacity and cycle characteristics of the battery were evaluated.

The results are as described in Table 4 below. In Example 13 in which the oxetane ring-containing compound 1 was added, the cycle characteristics improved, as compared with Comparative Example 5 in which it was not added.

**[Table 4]**

| | Comparative Example 5 | Example 13 |
|---|---|---|
| Positive electrode active material | NCA | NCA |
| Negative electrode active material | SiO | SiO |
| Composition of electrolyte solution | LiPF₆ 1.0M, EC/EMC = 3/7 | LiPF₆ 1.0M, EC/EMC = 3/7 |
| Additive | 1% VC, 2% FEC | 1% Additive 1, 1% VC, 2% FEC |
| Viscosity of electrolyte solution (mPa·s) | 7 | 12 |
| Discharge capacity of battery (mAh/g) | 170 | 170 |
| Cycle characteristics | 0.70 | 0.76 |

Note that, for the various numerical ranges described herein, the upper limit values and the lower limit values thereof can be combined as desired, and all such combinations are deemed to be described herein as preferred numerical ranges. The descriptions of numerical ranges "X to Y" mean X or more and Y or less.

Several embodiments of the present invention have been described so far, but these embodiments are presented as examples and are not intended to limit the scope of the invention. These embodiments can be implemented in various other forms, and various omissions, substitutions, and changes can be made without departing from the spirit of the invention. These embodiments and omissions, substitutions, changes, and the like thereof are included in the scope and spirit of the invention, and are also included in the invention described in the claims and the equivalent scope thereof.

## Claims

1. An additive for a non-aqueous electrolyte solution in a lithium-ion secondary battery including a positive electrode, a negative electrode, and the non-aqueous electrolyte solution, the additive comprising a compound including an oxetane ring at a terminal thereof and including a urethane bond.

2. The additive for a non-aqueous electrolyte solution according to claim 1, wherein the compound includes a structure derived from a polycarbonate polyol.

3. The additive for a non-aqueous electrolyte solution according to claim 1, wherein, in the compound, a number of oxetane rings per molecule is 2.0 to 100 on average.

4. The additive for a non-aqueous electrolyte solution according to claim 1, wherein the compound has a weight-average molecular weight of 2,500 to 200,000.

5. A non-aqueous electrolyte solution for a lithium-ion secondary battery including a positive electrode, a negative electrode, and the non-aqueous electrolyte solution, the non-aqueous electrolyte solution comprising a supporting electrolyte, an aprotic solvent, and a compound including an oxetane ring at a terminal thereof and including a urethane bond.

6. The non-aqueous electrolyte solution according to claim 5, further comprising vinylene carbonate and/or fluoroethylene carbonate.

7. A lithium-ion secondary battery comprising a positive electrode, a negative electrode, and the non-aqueous electrolyte solution according to claim 5 or 6.
